# EUROPEAN PATENT SPECIFICATION

(11) **EP 2 510 272 B1**
(45) Date of publication and mention of the grant of the patent: **18.09.2013**
(21) Application number: 10809036.6
(22) Date of filing: 10.12.2010
(51) Int. Cl.: F16L 33/207

(54) **TUBE WITH AN IMPROVED CONNECTION PREFERABLY FOR AN AIR CONDITIONING SYSTEM**
ROHR MIT VERBESSERTERM ANSCHLUSS, VORZUGSWEISE FÜR EINE KLIMAANLAGE
TUYAU COMPORTANT UN RACCORD PERFECTIONNÉ, DE PRÉFÉRENCE POUR UN SYSTÈME DE CONDITIONNEMENT DE L'AIR

(30) Priority: 11.12.2009 IT TO20090978
(43) Date of publication of application: 17.10.2012
(73) Proprietor: DYTECH - Dynamic Fluid Technologies S.p.A., 10123 Torino (IT)
(72) Inventor: CASELLA, Luigi, I-10135 Torino (IT); ZANARDI, Mariofelice, I-10123 Torino (IT)
(74) Representative: Mola, Edoardo
(86) International application number: PCT/IB2010/003192
(87) International publication number: WO 2011/070437

(56) References cited:
- DE-A1-102008 024 360
- DE-U1- 20 221 504
- DE-U1- 29 814 047

## Description

### TECHNICAL FIELD

The present invention relates to a connection for a tube of a fluidic circuit of a motor vehicle, for example to connect a metal pipe and a polymer material pipe of an air conditioning system.

### BACKGROUND ART

A polymer material pipe may be connected to a metal pipe by means of a bell which is plastically deformed to compress an end portion of the polymer material pipe around an end portion of the metal pipe.

To increase the sealing to avoid gas escapes, for example refrigerant gas, it is known to insert at least one toroidal gasket, for example an o-ring, in a seat appropriately defined by the end portion of the metal pipe between the end portion of the polymer material pipe and the end portion of the metal pipe (see, for exemple, document DE-U-202 21 504). In particular, the polymer material pipe may comprise an inner layer of barrier material having a high hardness and such as to require the use of a gasket interposed between the inner layer and the end portion of the metal pipe so that the gas sealing is appropriate.

When the end portion of the metal pipe is worked by plastic deformation to decrease production costs, the seats of the toroidal gaskets are configured so that an optimum sealing is not ensured. In particular, the seats do not have 90° sides or sides with minimum rake angles and this implies that the toroidal gasket does not work in optimum conditions or that it can come out from its seat when the polymer material pipe is mounted on the end portion of the metal pipe.

### DISCLOSURE OF INVENTION

The object of the present invention is to provide a tube comprising a metal portion connected to a portion comprising at least one layer of polymer material free of the above specified drawback.

The object of the present invention is achieved by means of a tube according to claim 1.

### BRIEF DESCRIPTION OF THE DRAWINGS

The present invention will now be described with reference to the accompanying drawings, which show some non-limitative embodiments thereof, in which:
- figure 1 is a longitudinal section of a portion of the tube according to the present invention in which a flexible pipe has been removed for clarity; and
- figure 2 is a longitudinal section of a tube according to the portion of figure 1 in which both a rigid duct and the flexible pipe are shown.

### BEST MODE FOR CURRYING OUT THE INVENTION

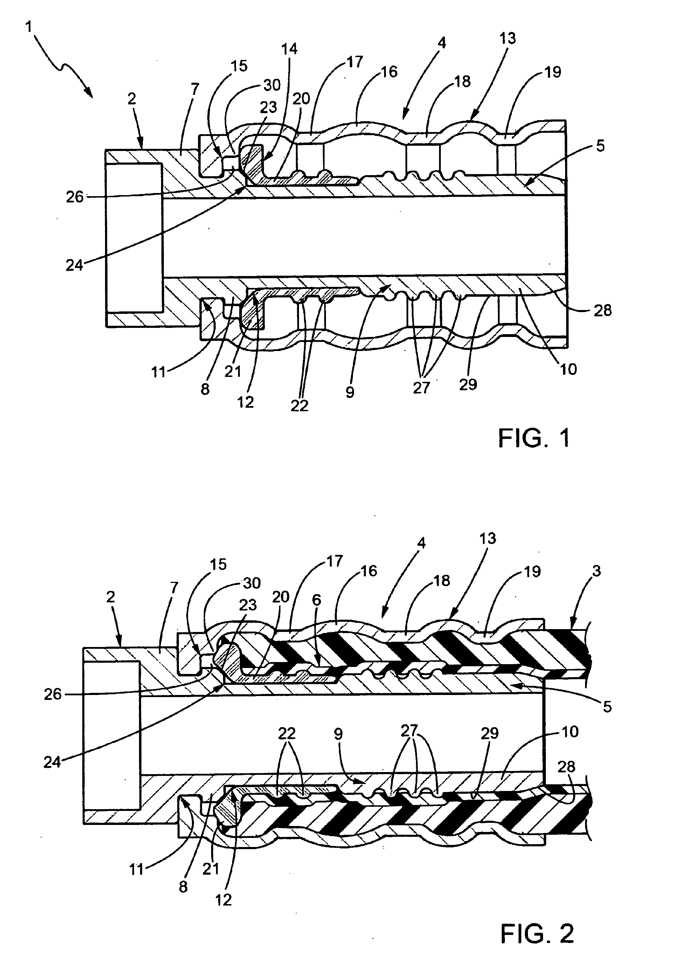

In figure 1 numeral 1 shows as a whole a tube for an air conditioning circuit of a motor vehicle comprising a metal duct 2, a flexible polymer material duct 3 (figure 2) and a connection 4 to sealingly connect and in particular gassealingly connect duct 2 to duct 3.

Metal duct 2 comprises an end portion 5 preferably profiled by plastic deformation operations and defining both a support for an end portion 6 of polymer material duct 3 and a fastening member for connection 4.

End portion 5 comprises, following a progressive order along the axial direction, an abutment 7, an annular boss 8, a corrugated portion 9 and a flared portion 10. At least annular boss 8, corrugated portion 9 and flared portion 10 have a shorter maximum diameter with respect to that of metal duct 2 so as to allow operations exclusively by plastic deformation.

End portion 5 further defines an annular groove 11 interposed between abutment 7 and annular boss 8 and a recess 12 interposed between annular boss 8 and corrugated portion 9. Annular groove 11 fastens to end portion 5 a bell 13 of connection 4 and recess 12 houses a seal 14 of connection 4.

Bell 13 comprises a head 15 defining a hole and housed in annular groove 11, and a lateral wall 16 projecting axially from head 15 to surround at least partially end portion 5 and end portion 6. Bell 13 is made of a metal material and is deformed by applying a radial load to press end portion 6 on end portion 5.

In particular, lateral wall 16 has in sequence along the axial direction from head 15, a first, a second and a third recess 17, 18, 19 respectively spaced in an axial direction and detecting the impressions of the plastic deformation process of lateral wall 16 to fasten bell 13 to flexible duct 3. Preferably, the plastic deformation process is calibrated so that recess 17 has a minimum diameter measured on the contact surface with flexible duct 3 greater with respect to the minimum diameter of recess 18 and/or recess 19. Even more preferably, the minimum diameter of recess 18 is intermediate with respect to the minimum diameters of recesses 17 and 19 respectively.

Seal 14 is at least partially surrounded by recess 17 and comprises a tubular body 20 and a flange 21 projecting radially from tubular body 20. Tubular body 20 is housed in recess 12 and integrally defines at least an annular boss 22. Annular boss 22 preferably faces lateral wall 16 to come into contact with end portion 6 of the polymer material pipe and is arranged, with respect to recess 17, at an axial level such that the radial fastening pressure exerted in the area of recess 17 is transferred through the wall of end portion 6 to tubular body 20 to compress annular boss 22 and thereby define a gas seal.

For the same reason, flange 21 has a maximum radial dimension greater than that of annular boss 8 and the latter defines a bevel 23 that faces a corresponding flaring 24 defined between flange 21 and tubular body 20. Furthermore, the maximum radial level of annular boss 8 is lower than the minimum radial level of lateral wall 16 in the area between head 15 and recess 17. In addition, the maximum diameter level of flange 21 is greater than the minimum radial level of lateral wall 16 in the area in the range between head 15 and recess 17 so that an annular chamber 26 is delimited in an axial direction by head 15 and flange 21 and in a radial direction by annular boss 8 and lateral wall 16.

Sideways with respect to tubular body 20 on the opposite axial side of annular boss 8, corrugated portion 9 has a plurality of annular ribs 27 and is arranged in an axial direction so as to be at least partially surrounded by recess 18.

Flared portion 10 defines a flaring 28 and a cylindrical portion 29 interposed between corrugated portion 9 and flaring 28. The cylindrical portion is at least partially surrounded by recess 19 of bell 13.

Preferably, cylindrical portion 29, corrugated portion 9 and tubular body 20 have respective maximum, intermediate and minimum diameters decreasing from cylindrical portion 29. Furthermore, in an undeformed configuration before assembly, bosses 22 have a maximum diameter greater than the maximum diameter of cylindrical portion 29.

Figure 2 shows a tube 1 assembled by connection 4 which fastens metal duct 2 to polymeric duct 3. As may be noted, corrugated portion 9 defines an anchoring in an axial direction between ducts 2 and 3 such as to meet the requirements of the motor vehicle industry. Furthermore, annular ribs 27 define a labyrinth seal such as to slow gas flows directed outside tube 1.

When lateral wall 13 is radially deformed, the radial pressure concentrates on the corrugated portion, as mentioned in the previous paragraph, on cylindrical portion 29, and on tubular body 20. The pressure on cylindrical portion 29 defines another gas seal. The pressure on tubular body 20 compresses annular boss 22 so as to define a gas seal and avoid the escape of gas both between end portion 6 and tubular body 20, and between tubular body 20 and seat 12.

Furthermore, when lateral wall 16 is compressed, the polymer material of end portion 6 tends to flow in an axial direction. This generates a load that at least partially extrudes flange 21 within chamber 26. Flange 21 which is thereby deformed is compressed mainly against bevel 23 and against abutment 30 projecting towards radial boss from lateral wall 16 and defining chamber 26 so as to define another gas seal. In particular, during the extrusion due to the axial deformation of end portion 6, bevel 23 contributes to distributing the loads on seal 14 so that the deformation thereof is such as not to overcome the rupture load. Thereby, even after extrusion, seal 14 is a continuous body that does not define passages for gas escape. Advantageously, the axial deformation of end portion 6 is facilitated by recesses 17, 18, 19 having radial dimensions such as to facilitate the deformation of end portion 6 against flange 21.

During assembly, the metal components of tube 1, i.e. end portion 5 and bell 13, and the polymeric material components, i.e. end portion 6 and seal 14, are respectively preassembled optionally at the same time.

Subsequently end portion 6 that carries seal 14 is mounted on end portion 5 and finally a radial load is applied on lateral wall 16 to generate recesses 17, 18, 19. Preferably, a radial load is also applied to deform head 15 in annular groove 11 so as to close at least the radial plays.

In order to have a mechanical resistance appropriate for assembly, seal 14 has a hardness higher than 80 Shore A, preferably about 85 Shore A and is preferably made of an HNBR material.

The advantages of tube 1 disclosed and shown herein are the following.

The seals are such as to meet the refrigerant gas sealing requirements and mechanical resistance to extraction in an axial direction is ensured.

In particular, tube 1 has the best sealing and mechanical resistance performances when the polymer material duct is a multilayer comprising a rubber layer, a reinforcement layer comprising a plait and a barrier layer having a hardness higher than the rubber layer and arranged in contact with cylindrical portion 29, corrugated portion 9 and tubular body 20. Advantageously, the refrigerant gas sealing system and in particular seal 14 is conceived to in particular close the leaks which would be generated because the inner barrier layer, due to the relatively high hardness, is not deformed enough around end portion 5 to provide an effective seal for refrigerant gas.

The assembly of tube 1 is safe because seal 14 is visible and its possible absence is therefore detected by the operator before assembly of end portion 6 on end portion 5. Furthermore, when bosses 22 only face lateral wall 16, tubular body 20 perfectly adheres to end portion 5 so as to avoid seal 14 from coming out of its seat when flexible duct 3 is mounted. This effect is also achieved by the contact of flange 21 on annular boss 8.

The geometry of end portion 5 that ensures the above specified requirements is simple and such as to be obtained by cost-effective plastic deformation techniques, such as roll forming.

It is finally apparent that tube 1 disclosed and shown herein may be modified or varied without departing from the scope of protection as specified in the appended claims.

Radial bosses similar to boss 22 facing towards seat 12 may be provided.

Head 15 of bell 13 may be configured by defining a collar to be pressed on metal duct 2 on the opposite side of cylindrical portion 29 with respect to annular boss 8. In this latter case it is not necessary that end portion 5 defines annular groove 11.

## Claims

1. A tube (1) for an air conditioning system comprising a rigid pipe (2), a flexible pipe (3) comprising at least one layer of polymeric material, and a connection (4) to fasten said rigid pipe (2) to said flexible pipe (3) and comprising a bell element (13) fastened to said rigid pipe (2) and plastically deformable to close a first end portion (6) of said flexible pipe (3) over a second end portion (5) of said rigid pipe (2), **characterized by** comprising a seal (14) comprising a tubular body (20) interposed radially between said first end portion (6) and said second end portion (5) and a flange (21) interposed axially between said first end portion (6) and said bell element (13).

2. The tube according to claim 1, **characterized in that** said tubular body (20) comprises at least a first annular boss (22).

3. The tube according to claim 2, **characterized in that** said bell element (13) comprises a lateral wall (16), plastically deformable and defining at least one recess (17) obtained by plastic deformation to fasten said first and second portion (6, 5) and having an axial position such as to generate a compression of said first annular boss (22).

4. The tube according to claim 3, **characterized in that** said lateral wall (16) defines at least a second recess (18; 19) having a minimum radial dimension smaller than that of said at least one recess (17) to facilitate axial deformation of said first end portion (6) against said flange (21).

5. The tube according to any of the preceding claims, **characterized in that** said flange (21) defines a flaring (24) facing a bevel (23) defined by a second annular boss (8) carried by said second end portion (5).

6. The tube according to claim 5, **characterized in that** said connection (4) defines a cavity (26) at least partly housing a portion of said flange (22) and **in that** said cavity (26) is axially interposed between said bell element (13) and said bevel (23).

7. The tube according to claim 6, **characterized in that** said flange (22) exerts a pressure against an abutment (30) projecting from said lateral wall (16) towards said second end portion (5) and radially delimiting said cavity (26).

8. The tube according to any of the preceding claims, **characterized in that** said seal (14) has a Shore A hardness of over 80 Shore A.

9. The tube according to any one of the preceding claims, **characterized in that** said second end portion (5) is achieved by plastic deformation operations.

10. An air conditioning system for a vehicle comprising an internal combustion engine comprising a tube according to any one of the preceding claims.

## Patentansprüche

1. Rohr (1) für eine Klimaanlage umfassend eine starre Rohrleitung (2), eine flexible Rohrleitung (3), welche wenigstens eine Lage aus einem Polymermaterial umfasst, und einen Anschluss (4) zur Befestigung der starren Rohrleitung (2) an der flexiblen Rohrleitung (3) und umfassend eine Hülse (13), welche an der starren Rohrleitung (2) befestigt ist und plastisch verformbar ist zum Verschließen eines ersten Endbereichs (6) der flexiblen Rohrleitung (3) über einen zweiten Endbereich (5) der starren Rohrleitung, **dadurch gekennzeichnet, dass** eine Dichtung (14) vorgesehen ist, welche einen radial zwischen den ersten Endbereich (6) und den zweiten Endbereich (5) zwischengelagerten rohrförmigen Körper (20) und einen axial zwischen den ersten Endbereich (6) und den zweiten Endbereich (5) zwischengelagerten Flansch (21) umfasst.

2. Rohr nach Anspruch 1, **dadurch gekennzeichnet, dass** der rohrförmige Körper (20) wenigstens einen ersten ringförmigen Ansatz (22) umfasst.

3. Rohr nach Anspruch 2, **dadurch gekennzeichnet, dass** die Hülse (13) eine plastisch verformbare seitliche Wand (16) umfasst, und wenigstens eine durch plastische Verformung erhaltene Aussparung (17) zur Befestigung der ersten und zweiten Bereiche (6; 5) definiert, eine axiale Position aufweisend, um eine Kompression des ersten ringförmigen Ansatzes (22) zu erzeugen.

4. Rohr nach Anspruch 3, **dadurch gekennzeichnet, dass** die seitliche Wand (16) wenigstens eine zweite Aussparung (18; 19) definiert, welche eine kleinste radiale Abmessung besitzt, die kleiner ist als jene der wenigstens einen Aussparung (17), um axiale Verformung des ersten Endbereichs (6) gegen den Flansch (21) zu erleichtern.

5. Rohr nach einem der vorhergehenden Ansprüche, **dadurch gekennzeichnet, dass** der Flansch (21) eine Erweiterung (24) definiert, die einer Fase (23) zugewandt ist, welche durch einen zweiten ringförmigen Ansatz (8) definiert ist, der von dem zweiten Endbereich (5) getragen wird.

6. Rohr nach Anspruch 5, **dadurch gekennzeichnet, dass** der Anschluss (4) einen Hohlraum (26) definiert, der wenigstens teilweise einen Bereich des Flanschs (22) aufnimmt, und dadurch, dass der Hohlraum (26) axial zwischengelagert ist zwischen der Hülse (13) und der Fase (23).

7. Rohr nach Anspruch 6, **dadurch gekennzeichnet, dass** der Flansch (22) einen Druck gegen ein Widerlager (30) ausübt, das von der seitlichen Wand (16) hin zu dem zweiten Endbereich (5) vorspringt und den Hohlraum (26) radial begrenzt.

8. Rohr nach einem der vorhergehenden Ansprüche, **dadurch gekennzeichnet, dass** die Dichtung (14) eine Shore A Härte von über 80 Shore A besitzt.

9. Rohr nach einem der vorhergehenden Ansprüche, **dadurch gekennzeichnet, dass** der zweite Endbereich (5) durch plastische Verformungs-Vorgänge erhalten ist/wird.

10. Klimaanlage für ein Fahrzeug, welches einen Verbrennungsmotor umfasst, umfassend ein Rohr nach einem der vorhergehenden Ansprüche.

## Revendications

1. Tube (1) pour un système de conditionnement d'air comprenant un tuyau rigide (2), un tuyau souple (3) comprenant au moins une couche de matériau polymère, et une connexion (4) pour fixer ledit tuyau rigide (2) audit tuyau souple (3) et comprenant un élément en tulipe (13) fixé audit tuyau rigide (2) et déformable plastiquement pour fermer une première partie d'extrémité (6) dudit tuyau souple (3) sur une deuxième partie d'extrémité (5) dudit tuyau rigide (2), **caractérisé par** le fait de comprendre un joint (14) comprenant un corps tubulaire (20) interposé radialement entre ladite première partie d'extrémité (6) et ladite deuxième partie d'extrémité (5) et une bride (21) interposée axialement entre ladite première partie d'extrémité (6) et ledit élément en tulipe (13).

2. Tube selon la revendication 1, **caractérisé en ce que** ledit corps tubulaire (20) comprend au moins une première protubérance annulaire (22).

3. Tube selon la revendication 2, **caractérisé en ce que** ledit élément en tulipe (13) comprend une paroi latérale (16), déformable plastiquement et définissant au moins un évidement (17) obtenu par déformation plastique pour fixer lesdites première et deuxième parties (6, 5) et ayant une position axiale de manière à générer une compression de ladite première protubérance annulaire (22).

4. Tube selon la revendication 3, **caractérisé en ce que** ladite paroi latérale (16) définit au moins un deuxième évidement (18 ; 19) ayant une dimension radiale minimale inférieure à celle dudit au moins un évidement (17) pour faciliter la déformation axiale de ladite première partie d'extrémité (6) contre ladite bride (21).

5. Tube selon l'une quelconque des revendications précédentes, **caractérisé en ce que** ladite bride (21) définit un évasement (24) opposé à un chanfrein (23) défini par une deuxième protubérance annulaire (8) supportée par ladite deuxième partie d'extrémité (5).

6. Tube selon la revendication 5, **caractérisé en ce que** ladite connexion (4) définit une cavité (26) recevant au moins partiellement une partie de ladite bride (22) et **en ce que** ladite cavité (26) est interposée axialement entre ledit élément en tulipe (13) et ledit chanfrein (23).

7. Tube selon la revendication 6, **caractérisé en ce que** ladite bride (22) exerce une pression contre une butée (30) dépassant de ladite paroi latérale (16) en direction de ladite deuxième partie d'extrémité (5) et délimitant radialement ladite cavité (26).

8. Tube selon l'une quelconque des revendications précédentes, **caractérisé en ce que** ledit joint (14) a une dureté Shore A supérieure à 80 Shore A.

9. Tube selon l'une quelconque des revendications précédentes, **caractérisé en ce que** ladite deuxième partie d'extrémité (5) est obtenue par des opérations de déformation plastique.

10. Système de conditionnement d'air pour un véhicule comprenant un moteur à combustion interne comprenant un tube selon l'une quelconque des revendications précédentes.
